# EUROPEAN PATENT APPLICATION

(11) **EP 3 886 074 A1**
(43) Date of publication of application: **29.09.2021**
(21) Application number: 19899478.2
(22) Date of filing: 28.06.2019
(51) Int. Cl.: G08G 1/14, G08G 1/04, G08G 1/16

(54) **METHOD AND DEVICE FOR DETECTING AVAILABLE PARKING SPACE**

(30) Priority: 20.12.2018 CN 201811559894
(71) Applicant: Guangzhou Xiaopeng Motors Technology Co., Ltd., Guangzhou (CN)
(72) Inventor: ZHANG, Xuefei, Guangzhou, Guangdong 510000 (CN); XIAO, Zhiguang, Guangzhou, Guangdong 510000 (CN); PAN, Lilan, Guangzhou, Guangdong 510000 (CN); JIANG, Shaofeng, Guangzhou, Guangdong 510000 (CN)
(74) Representative: Ran, Handong
(86) International application number: PCT/CN2019/093445
(87) International publication number: WO 2020/124986

(57) **Abstract**

A method and detection device for detecting an available parking space are disclosed, which relate to the field of parking space detection technology. The method includes: the detection device uses an ultrasonic sensor of a vehicle to perform detection at a specified frequency to obtain the distance from the vehicle to an obstacle (101); the detection device determines a plurality of location coordinates of the obstacle based on location coordinates of the ultrasonic sensor of the vehicle and the distances measured through multiple rounds of detection (102); the detection device fits the plurality of location coordinates to obtain a boundary of the obstacle, and detects a jump edge of the boundary of the obstacle (103); the detection device adjusts the length of the jump edge based on a pre-constructed calibration correlation between location data measured by an ultrasonic sensor and location data of actual obstacles (104); and the detection device determines the location of an available parking space based on the length-adjusted jump edge (105). This can reduce vacant parking spaces missed by the detection, which are relatively narrow but sufficient to accommodate the vehicle, thereby improving the efficiency of automatic parking.

## Description

### Field of Invention

The present invention relates to the field of parking space detection technology, and more particularly to a method and detection device for detecting an available parking space.

### Background

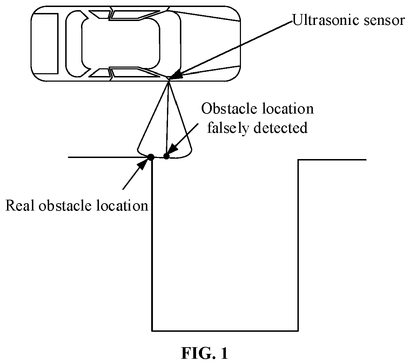

As the automotive industry rapidly evolves in recent years, in a majority of cities, finding an available parking space from a limited parking space resource has become one of the hardest problems for a driver. Currently, the most common automatic parking technology is the ultrasonic parking. Ultrasonic parking detects the location of an obstacle using features of ultrasonic sensors, and determines whether there is a vacant parking space that is sufficient to accommodate a vehicle and to allow for a safely parking of the vehicle based on the location of the obstacle. As shown in FIG. 1, an ultrasonic sensor emits ultrasonic waves at a beam angle and receives echoes to determine the location of an obstacle. The sensing boundary of the ultrasonic waves defines a sector area. It is however difficult for the ultrasonic sensor to identify where in the sector area the obstacle is exactly located. It is typically considered by default that the obstacle is located at the center of the arc of the sector area. However, the boundary of the obstacle measured in this manner tends to exceed the actual boundary of the obstacle, which may result in missing by the detection some vacant parking spaces that are relatively narrow but actually sufficient to accommodate the vehicle, thereby decreasing the efficiency of automatic parking.

### Summary of Invention

Embodiments of the present invention disclose a method and detection device for detecting an available parking space, which can reduce parking spaces missed by the detection and enhance the efficiency of automatic parking.

In accordance with a first aspect of the present invention, there is provided a method for detecting an available parking space, comprising:
performing detection using an ultrasonic sensor of a vehicle at a specified frequency to obtain distances from the vehicle to an obstacle;
determining a plurality of location coordinates of the obstacle based on location coordinates of the ultrasonic sensor of the vehicle and the distances measured through multiple rounds of detection;
fitting the plurality of location coordinates to obtain a boundary of the obstacle, and detecting a jump edge of the boundary of the obstacle;
adjusting a length of the jump edge based on pre-constructed calibration correlation between location data measured by ultrasonic sensors and location data of actual obstacles; and
determining a location of an available parking space based on the length-adjusted jump edge.

In a preferred embodiment, the step of adjusting the length of the jump edge based on the pre-constructed calibration correlation between location data measured by ultrasonic sensors and location data of actual obstacles comprises:
acquiring a vehicle model of the vehicle;
searching for calibration correlation corresponding to the vehicle model of the vehicle, wherein the calibration correlation is correlation between location data measured by an ultrasonic sensor and location data of actual obstacles, wherein ultrasonic sensors are mounted at a same position on vehicles of a same vehicle model; and
adjusting the length of the jump edge based on the calibration correlation.

In a preferred embodiment, the method further comprises:
acquiring a grid map constructed by a laser sensor and odometer of a tested vehicle of the same vehicle model to the vehicle, as the location data of actual obstacles; and
mapping location data measured by an ultrasonic sensor of the tested vehicle of the same vehicle model to the vehicle into the grid map, to obtain the calibration correlation corresponding to the vehicle model and between the location data measured by the ultrasonic sensor and the location data of actual obstacles,
wherein the mounting positions of the laser sensor and the ultrasonic sensor on the tested vehicle are within the same horizontal plane.

In a preferred embodiment, the method further comprises, after determining the location of the available parking space based on the length-adjusted jump edge:
checking whether a width of the available parking space is greater than a width of a body of the vehicle;
if so, marking the available parking space as a standard parking space to cause the vehicle to park into the standard parking space, wherein the standard parking space is a parking space sufficient to accommodate the vehicle; and
if not, proceeding to perform the step of performing detection using the ultrasonic sensor of the vehicle at the specified frequency.

In a preferred embodiment, the method further comprises, after marking the available parking space as a standard parking space such that the vehicle is parked in the standard parking space:
acquiring location information of the standard parking space; and
transmitting the location information of the standard parking space to a terminal device of a user to allow the user to find the vehicle based on the location information of the standard parking space.

In accordance with a second aspect of the present invention, there is provided a detection device for detecting an available parking space, comprising:
detection unit, configured to perform detection using an ultrasonic sensor of a vehicle at a specified frequency to obtain distances from the vehicle to an obstacle;
a determination unit, configured to determine a plurality of location coordinates of the obstacle based on location coordinates of the ultrasonic sensor of the vehicle and the distances measured through multiple rounds of detection;
a fitting unit, configured to fit the plurality of location coordinates to obtain a boundary of the obstacle, and to detect a jump edge of the boundary of the obstacle; and
an adjustment unit, configured to adjust a length of the jump edge based on a pre-constructed calibration correlation between location data measured by ultrasonic sensors and location data of actual obstacles,
wherein the determination unit is further configured to determine a location of an available parking space based on the length-adjusted jump edge.

In a preferred embodiment, the adjustment unit comprises:
an acquisition subunit, configured to acquire a vehicle model of the vehicle;
a searching subunit, configured to search for calibration correlation corresponding to the vehicle model of the vehicle, wherein the calibration correlation is correlation between location data measured by an ultrasonic sensor and location data of actual obstacles, wherein ultrasonic sensors are mounted at a same position on vehicles with a same vehicle model; and
an adjustment subunit, configured to adjust the length of the jump edge based on the calibration correlation.

In a preferred embodiment, the device further comprises:
a first acquisition unit, configured to acquire a grid map constructed by a laser sensor and odometer of a tested vehicle with the same vehicle model of the vehicle, as the location data of actual obstacles; and
a mapping unit, configured to map location data measured by an ultrasonic sensor of the tested vehicle with the same vehicle model of the vehicle into the grid map, to obtain the calibration correlation corresponding to the vehicle model and between the location data measured by the ultrasonic sensor and the location data of actual obstacles,
wherein the mounting positions of the laser sensor and the ultrasonic sensor on the tested vehicle are within the same horizontal plane.

In a preferred embodiment, the device further comprises:
a checking unit, configured to check whether a width of the available parking space is greater than a width of a body of the vehicle, after the determination unit determines the location of the available parking space based on the length-adjusted jump edge; and
a marking unit, configured to mark the available parking space as a standard parking space to cause the vehicle to park into the standard parking space, after the checking unit determines that the width of the available parking space is greater than the width of the body of the vehicle, wherein the standard parking space is a parking space sufficient to accommodate the vehicle,
wherein the detection unit is further configured to proceed to perform detection using the ultrasonic sensor of the vehicle at the specified frequency, after the checking unit determines that the width of the available parking space is smaller than or equal to the width of the body of the vehicle.

In a preferred embodiment, the device further comprises:
a second acquisition unit, configured to acquire location information of the standard parking space, after the marking unit marks the available parking space as a standard parking space to cause the vehicle to park into the standard parking space; and
a transmitting unit, configured to transmit the location information of the standard parking space to a terminal device of a user to allow the user to find the vehicle based on the location information of the standard parking space.

In accordance with a third aspect of the present invention, there is provided a detection device for detecting an available parking space, comprising:
a memory device having stored thereon executable program codes; and
a processor coupled with the memory device,
wherein the processor is configured to execute the executable program codes stored on the memory device to carry out a method for detecting an available parking space disclosed in the first aspect of the embodiments of the present invention.

In accordance with a fourth aspect of the present invention, there is provided a computer readable storage medium having stored thereon a computer program which, when executed, causes a computer to carry out the method for detecting an available parking space disclosed in the first aspect of the present invention.

In accordance with a fifth aspect of the present invention, there is provided a computer program product which, when executed on a computer, causes the computer to carry out some or all of the steps of one of the methods of the first aspect.

In accordance with a sixth aspect of the present invention, there is provided an application distributing platform for distributing a computer program product, wherein the computer program product, when executed on a computer, causes the computer to carry out some or all of the steps of one of the methods of the first aspect.

Compared with the prior art, the embodiments of the present invention provide following beneficial effects.

In the embodiments of the present invention, detection is performed using an ultrasonic sensor of a vehicle at a specified frequency to obtain the distance from the vehicle to an obstacle. A plurality of location coordinates of the obstacle are determined based on location coordinates of the ultrasonic sensor of the vehicle and the distances measured through multiple rounds of detection. The plurality of location coordinates are fitted to obtain the boundary of the obstacle, and a jump edge of the boundary of the obstacle is detected. The length of the jump edge is adjusted based on a pre-constructed calibration correlation between location data measured by an ultrasonic sensor and location data of actual obstacles. At last, the location of an available parking space is determined based on the length-adjusted jump edge. As can be seen, with the embodiments of the present invention, detection may be performed using ultrasonic sensors to obtain location coordinates of the obstacle, and a jump edge of the boundary of the obstacle is adjusted based on the pre-constructed calibration correlation, so as to reduce vacant parking spaces, missed by the detection, that are relatively narrow but sufficient to accommodate the vehicle. This can reduce error in the detection and enhance the efficiency of automatic parking.

### Brief Description of Drawings

In order to make the technical aspects of the embodiments of the present invention more apparent, a brief description will be given below to the drawings used in the embodiments of the present invention. Obviously, the drawings set forth below are indicative of but a few of the embodiments of the invention. Other drawings may occur to those skilled in the art from the following drawings without inventive efforts.
FIG. 1 is an example diagram showing detection by an ultrasonic sensor in accordance with an embodiment of the present invention;
FIG. 2 is a flow chart illustrating a method for detecting an available parking space in accordance with an embodiment of the present invention;
FIG. 3 is a flow chart illustrating another method for detecting an available parking space in accordance with an embodiment of the present invention;
FIG. 4 is a flow chart illustrating a process of acquiring an ultrasonic sensor calibration correlation in accordance with an embodiment of the invention;
FIG. 5 is a flow chart illustrating yet another method for detecting an available parking space in accordance with an embodiment of the present invention;
FIG. 6 is a schematic structural view of a detection device for detecting an available parking space in accordance with an embodiment of the present invention;
FIG. 7 is a schematic structural view of another detection device for detecting an available parking space in accordance with an embodiment of the present invention;
FIG. 8 is a schematic structural view of yet another detection device for detecting an available parking space in accordance with an embodiment of the present invention;
FIG. 9 is a schematic structural view of still another detection device for detecting an available parking space in accordance with an embodiment of the present invention.

### Detailed Description

Technical aspects of the embodiments of the present invention will now be described more fully and clearly with reference to the drawings of the embodiments of the present invention. Apparently, the illustrated embodiments are merely a few, instead of all, of the embodiments of the invention. Any other embodiments obtained by those skilled in the art based on the embodiments of the present invention without creative efforts are deemed as falling within the scope of the present invention.

It is to be noted that, as utilized in this description and the claims, terms "first," "second," and the like are intended to distinguish different objects, not to describe specific ordering. Terms "comprise," "include," "have," "with," and variations thereof are intended to be inclusive. For example, a process, method, system, article, or device that comprises a list of steps or units is not necessarily limited to those steps or units expressly listed, but may include other steps or units not expressly listed or inherent to such process, method, article, or device.

The embodiments of the present invention disclose a method and detection device for detecting an available parking space, which can reduce parking spaces missed by detections and enhance the efficiency of automatic parking. The detailed description is set forth below in connection with the drawings.

### First Embodiment

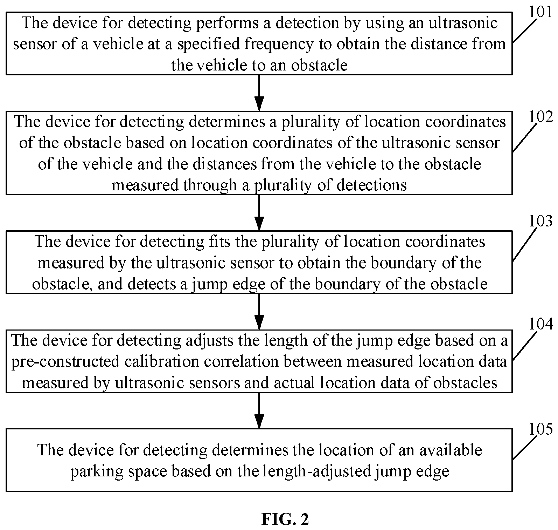

Referring to FIG. 2, FIG. 2 is a flow chart illustrating a method for detecting an available parking space in accordance with an embodiment of the present invention. As shown in FIG. 2, the method may include the following steps.

At 101, a detection device performs detection using an ultrasonic sensor of a vehicle at a specified frequency to obtain the distance from the vehicle to an obstacle.

In an embodiment of the present invention, an ultrasonic sensor may emit at the specified frequency an ultrasonic wave that may be returned in the form of an echo if it encounters an obstacle. If the ultrasonic sensor receives the echo, it indicates that there is an obstacle. The ultrasonic detection device may calculate the distance from the vehicle to the obstacle based on the propagation speed of the ultrasonic wave and the time from emitting the ultrasonic wave to receiving the echo.

In the embodiment of the present invention, the detection device performs the detection using the ultrasonic sensor of the vehicle at the specified frequency, and calculates the location coordinates of the obstacle. The detection device fits a plurality of location coordinates of the obstacle to obtain the boundary of the obstacle, and determines a jump edge of the obstacle. The detection device then corrects the jump edge of the boundary of the measured obstacle according to a certain rule. This can reduce vacant parking spaces that are relatively narrow and sufficient to accommodate the vehicle but are missed by the detection, and can construct an available parking space more accurately.

It is to be understood that the obstacle described above may be a parked vehicle, or may be a pillar, which is not limited herein.

In an embodiment of the present invention, ultrasonic sensors used for detecting the distance from the vehicle to an obstacle are disposed on the left and right sides of the vehicle.

In a preferred embodiment, during the detection by the detection device using the ultrasonic sensors of the vehicle at the specified frequency, if an ultrasonic sensor disposed at the front end of the vehicle detects that there is an obstacle (such as a pillar, a moving vehicle, or a pedestrian) in front of the vehicle, the detection device suspends step 101 from being performed, i.e., suspending the parking process. By applying the above embodiment, the vehicle can be prevented from colliding with an obstacle such as a pillar, another vehicle, or a pedestrian in front of the vehicle during the parking, whereby guaranteeing a safely parking.

In addition, as an alternative embodiment, after the suspension of performing step 101, the detection device may expect a user to confirm whether the obstacle in front of the user is a moving vehicle or a pedestrian. After receiving an instruction input by the user indicating that the obstacle in front is a moving vehicle or a pedestrian, the detection device starts a timer and checks that the timing duration is greater than a preset duration. If so, the detection device detects whether there is still the obstacle in front of the vehicle using the ultrasonic sensor disposed at the front of the vehicle; and if not, the detection device proceeds to perform step 101. By applying the above embodiment, if a moving vehicle or pedestrian is in front of the vehicle during the parking, the moving vehicle or pedestrian may leave soon, and the parking can continue then. This can enhance the efficiency of parking.

At 102, the detection device determines a plurality of location coordinates of the obstacle based on location coordinates of the ultrasonic sensor of the vehicle and the distances from the vehicle to the obstacle measured through multiple rounds of detection.

As an example, the ultrasonic sensor emits an ultrasonic wave at the specified frequency as the vehicle moves slowly during the parking. When encountering a parked vehicle, the ultrasonic wave will return in the form of an echo. When the ultrasonic sensor receives the echo, the distance from the vehicle to the parked vehicle is calculated, and location coordinates of the parked vehicle are determined based on location coordinates of the ultrasonic sensor and the calculated distance. Then, the ultrasonic sensor continues to detect the parked vehicle in the same manner. A plurality of location coordinates are thus obtained through multiple rounds of detection.

At 103, the detection device fits the plurality of location coordinates measured by the ultrasonic sensor to obtain the boundary of the obstacle, and detects a jump edge of the boundary of the obstacle.

In an embodiment of the present invention, the ultrasonic sensor emits an ultrasonic wave at the specified frequency for detection. A plurality of location coordinates of the obstacle are obtained through multiple rounds of detection. For every two adjacent location coordinates, a difference is obtained by subtracting the former location coordinates from the latter location coordinates. A determination is made as whether the absolute value of this difference is greater than a specified threshold. If so, the former one of the two adjacent location coordinates is determined as a boundary point of the obstacle. The first location coordinates of the plurality of location coordinates of the obstacle obtained through the plurality of detections by the ultrasonic sensor and the location coordinates representative of the boundary point are fitted into a line segment, which can represent a boundary of the obstacle. The location coordinates representative of the boundary point and location coordinates preceding the location coordinates representative of the boundary point are fitted into a line segment, which can represent a jump edge of the boundary of the obstacle.

As an example, the vehicle moves slowly during the parking. In the case where the obstacle is a parked vehicle, an ultrasonic sensor emits an ultrasonic wave at the specified frequency to detect the parked vehicle. Multiple location coordinates are obtained through multiple rounds of detection. The detection device then subtracts the former location coordinates from the latter location coordinates of every two adjacent location coordinates to obtain a difference, and determines whether the absolute value of the difference is greater than the specified threshold. If the absolute value of the difference is greater than the specified threshold, the former one of the two adjacent location coordinates is determined as a boundary point of the parked vehicle. The first location coordinates of the plurality of location coordinates of the parked vehicle obtained in the plurality of detections by the ultrasonic sensor and the location coordinates representative of the boundary point are fitted into a line segment, which is used to represent a boundary of the parked vehicle. The location coordinates representative of the boundary point and location coordinates preceding the location coordinates representative of the boundary point are fitted into a line segment, which is used to represent a jump edge of the boundary of the parked vehicle.

At 104, the detection device adjusts the length of the jump edge based on a pre-constructed calibration correlation between location data measured by ultrasonic sensors and location data of actual obstacles.

As can be appreciated, some parking spaces may be missed in detection because the boundary of an obstacle measured by an ultrasonic sensor tends to exceed the actual boundary of the obstacle. Thus, the detection device shortens the line segment representing the jump edge of the boundary of the obstacle based on the calibration correlation between location data measured by ultrasonic sensors and location data of actual obstacles, and the shortened line segment is referred to as the length-adjusted jump edge.

As an example, calibration correlation between location data measured by an ultrasonic sensor(s) of a vehicle(s) with a vehicle model of A and location data of actual obstacles indicates that the measured boundary of the obstacle exceeds the actual boundary of the obstacle by N cm, where N is a real number. Therefore, the detection device shortens the line segment representing the jump edge of the obstacle's boundary by N cm based on this calibration correlation, and determines the line segment shortened by N cm as a length-adjusted jump edge.

At 105, the detection device determines the location of an available parking space based on the length-adjusted jump edge.

In an embodiment of the present invention, the detection device selects two adjacent obstacles that are detected, and adjusts the lengths of jump edges of boundaries of the two adjacent obstacles based on the calibration correlation. After that, the detection device determines the location of the available parking space based on the two adjacent length-adjusted jump edges.

By applying the method illustrated in FIG. 2, the detection device uses the ultrasonic sensor of the vehicle to perform detection at the specified frequency, and determines a jump edge of the obstacle. After that, the detection device corrects the jump edge of the boundary of the measured obstacle according to a certain rule. This can more accurately detect available parking spaces, reduce parking spaces missed by detections, and enhance the efficiency of automatic parking.

### Second Embodiment

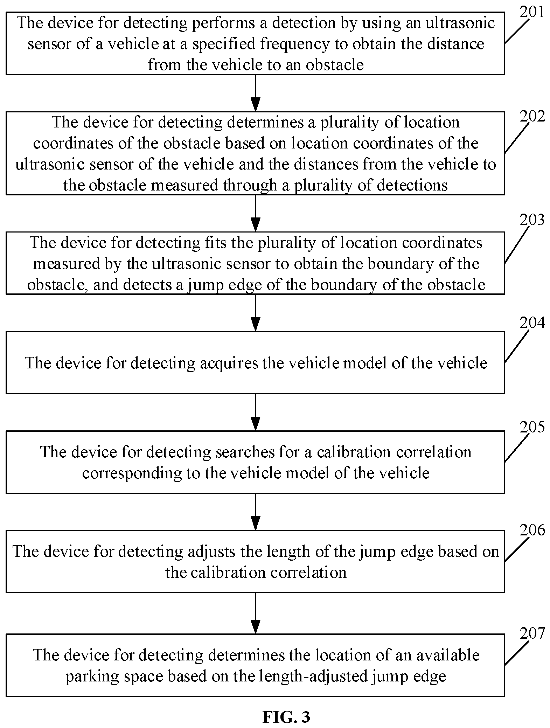

Referring to FIG. 3, FIG. 3 is a flow chart illustrating another method for detecting an available parking space in accordance with an embodiment of the present invention. As shown in FIG. 3, the method may include the following steps.

At 201, a detection device performs detection using an ultrasonic sensor of a vehicle at a specified frequency to obtain the distance from the vehicle to an obstacle.

It is to be understood that the obstacle described above may be a parked vehicle, or may be a pillar, which is not limited herein.

As an alternative embodiment, prior to initiating the parking, that is, prior to the detection at the specified frequency by the detection device using the ultrasonic sensor of the vehicle, the detection device may access historical parking records for the vehicle. If there is an available parking space in the historical parking records that matches the area where the current vehicle is located, the detection device recommends location information of the available parking space to the user. By applying the embodiment described above, it is possible to recommend an available parking space according to the user's parking habits, which can improve the user's driving experience.

At 202, the detection device determines a plurality of location coordinates of the obstacle based on location coordinates of the ultrasonic sensor of the vehicle and the distances from the vehicle to the obstacle measured through multiple rounds of detection.

At 203, the detection device fits the plurality of location coordinates measured by the ultrasonic sensor to obtain the boundary of the obstacle, and detects a jump edge of the boundary of the obstacle.

At 204, the detection device acquires the vehicle model of the vehicle.

As an alternative embodiment, if the detection device has detected that a headphone socket of the detection device is plugged into by a headphone plug of a wired headphone, the detection device acquires the vehicle model input by the user through the wired headphone plugged into the headphone socket of the detection device. If the detection device has detected that a Bluetooth module built in the detection device is connected to a Bluetooth-capable wireless device, the detection device acquires the vehicle model input by the user through the wireless device connected to the Bluetooth module built in the detection device. If the detection device has neither detected that the headphone socket of the detection device is plugged into by a headphone plug of a wired headphone nor detected that the Bluetooth module built in the detection device is connected to a Bluetooth-capable wireless device, the detection device displays a vehicle model inputting box in which the user enters the vehicle model of the vehicle. The detection device acquires the vehicle model of the vehicle through the vehicle model inputting box. By applying the embodiment described above, the user's driving experience can be improved.

At 205, the detection device searches for calibration correlation corresponding to the vehicle model of the vehicle.

The calibration correlation is correlation between location data measured by an ultrasonic sensor(s) and location data of actual obstacles(s). For vehicles with a same vehicle model, ultrasonic sensors are mounted on a same portion of the vehicles.

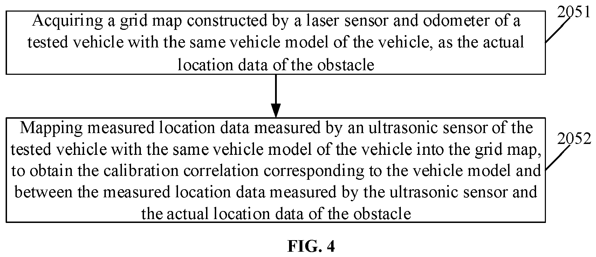

Referring to FIG. 4, FIG. 4 is a flow chart illustrating a process of acquiring an ultrasonic sensor calibration correlation in accordance with an embodiment of the invention. As an alternative embodiment, the process of acquiring the calibration correlation includes, as shown in FIG. 4:
at 2051, acquiring a grid map constructed by a laser sensor and odometer of a tested vehicle with the same vehicle model of the vehicle, as the location data of actual obstacles; and
at 2052, mapping location data measured by an ultrasonic sensor of the tested vehicle with the same vehicle model of the vehicle into the grid map, to obtain the calibration correlation corresponding to the vehicle model and between the location data measured by the ultrasonic sensor and the location data of actual obstacles.

The position on the tested vehicle where the laser sensor of the tested vehicle is mounted and the position on the tested vehicle where the ultrasonic sensor of the tested vehicle is mounted are within a same horizontal plane.

In an embodiment of the present invention, the acquisition of the calibration correlation may be performed by the detection device. In other embodiments, the acquisition of the calibration correlation may be performed by other apparatuses or devices, such as a service apparatus of an ultrasonic calibration system, a control of the ultrasonic calibration system, and the like, which is not limited herein.

For example, the vehicle is of the model of A. The detection device maps the location data measured by the ultrasonic sensor of the tested vehicle with the vehicle model A into the grid map to obtain calibration correlation between the location data measured by the ultrasonic sensor of the vehicle with the vehicle model A and the location data of actual obstacles. The obtained calibration correlation indicates that the measured boundary of the obstacle exceeds the actual boundary of the obstacle by N cm, where N is a real number.

It should be noted that the acquisition of the calibration correlation at steps 2051-2052 may be performed in advance. After the calibration correlation is acquired at steps 2051-2052, a corresponding calibration correlation can be found directly based on the vehicle model at step 205.

As another alternative embodiment, the calibration correlation may also be acquired in the following way. Correlation between large quantities of location data measured by ultrasonic sensors of tested vehicles of the same vehicle model as the vehicle in actual detection processes and location data of actual obstacles is acquired. With the correlation data as training samples, a model associated with this vehicle model is trained, which can represent a model of correlation between the location data measured by the ultrasonic sensors and the location data of the actual obstacles. Further, when inputting the vehicle model into the trained model at a later time, the trained model can output the correlation, corresponding to this vehicle model, between the location data measured by the ultrasonic sensors and the location data of actual obstacles. By applying the embodiment described above, parking success rate can be increased.

At 206, the detection device adjusts the length of the jump edge based on the calibration correlation.

At 207, the detection device determines the location of an available parking space based on the length-adjusted jump edge.

By applying the method illustrated in FIG. 3, the detection device uses the ultrasonic sensor of the vehicle to perform detection at the specified frequency, and determines a jump edge of the obstacle. After that, the detection device corrects the jump edge of the boundary of the measured obstacle according to a certain rule. This allows for more accurately detection of available parking spaces, reduces parking space detection misses, and enhances efficiency of automatic parking. As can be seen, the method, as illustrated in FIG. 3, acquires in advance the calibration correlation between location data measured by ultrasonic sensors and location data of actual obstacles. Subsequently, a corresponding calibration correlation can be found directly according to the vehicle model, so that the efficiency of parking space detection can be improved.

### Third Embodiment

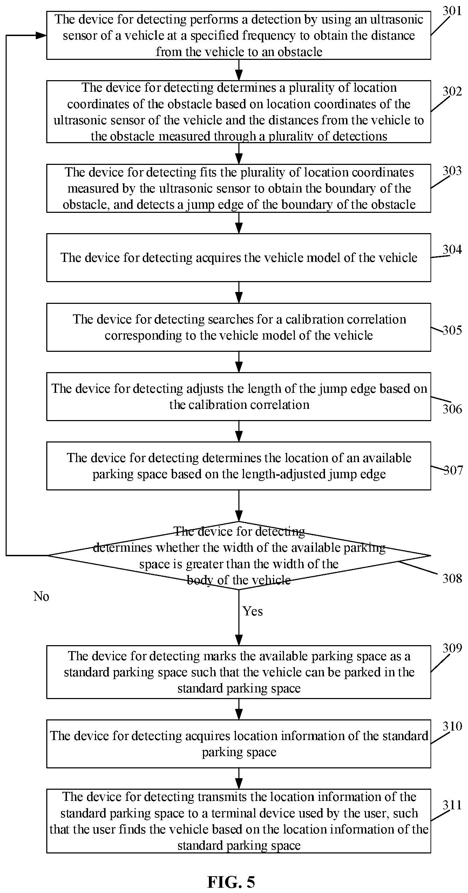

Referring to FIG. 5, FIG. 5 is a flow chart illustrating another method for detecting an available parking space in accordance with an embodiment of the present invention. As shown in FIG. 5, the method may include the following steps.

At 301-307, steps 301-307 are the same as steps 201-207 in the second embodiment, and will not be repeated herein.

At 308, the detection device determines whether the width of the available parking space is greater than the width of the body of the vehicle; if not, performs step 301; and if so, performs step 309.

At 309, the detection device marks the available parking space as a standard parking space such that the vehicle can be parked in the standard parking space.

The standard parking space is a parking space sufficient to accommodate the vehicle.

At 310, the detection device acquires location information of the standard parking space.

As an alternative embodiment, the detection device may have a built-in positioning system through which the detection device may acquire the location information of the standard parking space where the vehicle is parked.

In an embodiment of the present invention, the positioning system may include a Global Positioning System (GPS), a BeiDou Navigation Satellite System, or the like, which is not limited herein.

At 311, the detection device transmits the location information of the standard parking space to a terminal device used by the user, such that the user finds the vehicle based on the location information of the standard parking space.

As an alternative embodiment, when the detection device detects the end of the parking, the detection device may remind the user to pull out the vehicle key and close the vehicle door. By applying the above embodiment, it can prevent the user from forgetting to pull out the vehicle key or close the vehicle door after the parking.

By applying the method illustrated in FIG. 5, the detection device uses the ultrasonic sensor of the vehicle to perform detection at the specified frequency, and determines a jump edge of the obstacle. After that, the detection device corrects the jump edge of the boundary of the measured obstacle according to a certain rule. This can detect more accurately available parking spaces, reduce parking spaces missed by detections, and enhance the efficiency of automatic parking. In addition, the method, as illustrated in FIG. 5, acquires in advance the calibration correlation between location data measured by ultrasonic sensors and location data of actual obstacles. Subsequently, a corresponding calibration correlation can be found directly according to the vehicle model, so that the efficiency of parking space detection can be improved. In addition, the method, as illustrated in FIG. 5, further determines whether a parking space is sufficient to accommodate the vehicle to be parked therein after the available parking space is determined, which can improve parking safety. In addition, the method, as illustrated in FIG. 5, transmits the location information of the standard parking space to the user, such that the user can find the vehicle according to the location information of the standard parking space and is reminded when the user forgets the location where the vehicle is parked.

### Fourth Embodiment

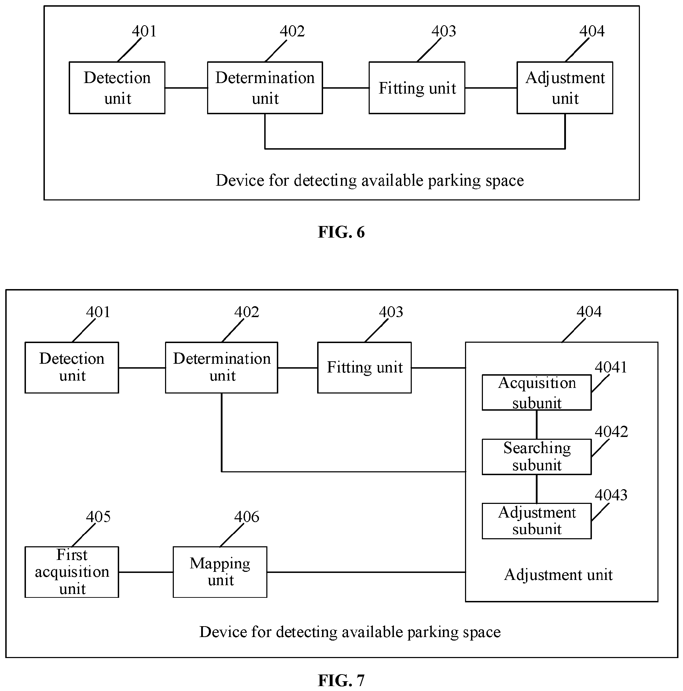

Referring to FIG. 6, FIG. 6 is a schematic structural view of a detection device for detecting an available parking space in accordance with an embodiment of the present invention. As shown in FIG. 6, the detection device may comprise:
detection unit 401, configured to perform detection using an ultrasonic sensor of a vehicle at a specified frequency to obtain a distance from the vehicle to an obstacle;
a determination unit 402, configured to determine a plurality of location coordinates of the obstacle based on location coordinates of the ultrasonic sensor of the vehicle and the distances measured through multiple rounds of detection;
a fitting unit 403, configured to fit the plurality of location coordinates measured by the ultrasonic sensor to obtain a boundary of the obstacle, and to detect a jump edge of the boundary of the obstacle; and
an adjustment unit 404, configured to adjust a length of the jump edge based on a pre-constructed calibration correlation between location data measured by ultrasonic sensors and location data of actual obstacles,
wherein the determination unit 402 is further configured to determine a location of an available parking space based on the length-adjusted jump edge.

In an embodiment of the present invention, the ultrasonic sensors used for detecting the distance from the vehicle to the obstacle are disposed on the left and right sides of the vehicle.

As an alternative embodiment, during the detection by the detection unit 401 using the ultrasonic sensor of the vehicle at the specified frequency, if the ultrasonic sensor disposed at the front end of the vehicle detects that there is an obstacle (such as a pillar, a moving vehicle, or a pedestrian) in front of the vehicle, the detection unit 401 suspends the detection by the ultrasonic sensor of the vehicle at the specified frequency, i.e., the parking process. By applying the above embodiment, the vehicle can be prevented from colliding with an obstacle such as a pillar or a pedestrian in front of the vehicle in the course of parking, whereby guaranteeing a safely parking.

Further, as an alternative embodiment, after the detection unit 401 suspends the detection performed by the ultrasonic sensor of the vehicle at the specified frequency, the detection unit 401 may expect the user to confirm whether the obstacle in front of the user is a moving vehicle or a pedestrian. After receiving an instruction input by the user indicating that the obstacle in front is a moving vehicle or a pedestrian, the detection unit starts a timer and checks that the timing duration is greater than a preset duration. If so, the detection unit 401 detects whether there is still the obstacle in front of the vehicle using the ultrasonic sensor disposed at the front of the vehicle; and if not, the detection unit 401 proceeds the parking process. By applying the above embodiment, if a moving vehicle or pedestrian is in front of the vehicle during the parking, the moving vehicle or pedestrian may leave soon, and the parking can continue then. This can enhance the efficiency of parking.

By applying the detection device for detecting an available parking space illustrated in FIG. 6, the detection device uses the ultrasonic sensor of the vehicle to perform detection at the specified frequency, and determines a jump edge of the obstacle. After that, the detection device corrects the jump edge of the boundary of the measured obstacle according to a certain rule. This can detect more accurately available parking spaces, reduce parking spaces missed by the detections, and enhance the efficiency of automatic parking.

### Fifth Embodiment

Referring to FIG. 7, FIG. 7 is a schematic structural view of another detection device for detecting an available parking space in accordance with an embodiment of the present invention. The detection device illustrated in FIG. 7 is further optimized from the detection device illustrated in FIG. 6. Compared with the detection device illustrated in FIG. 6, the detection device illustrated in FIG. 7 may further comprise:
a first acquisition unit 405, configured to acquire a grid map constructed by a laser sensor and odometer of a tested vehicle with the same vehicle model of the vehicle, as the location data of actual obstacles; and
a mapping unit 406, configured to map location data measured by an ultrasonic sensor of the tested vehicle with the same vehicle model of the vehicle into the grid map, to obtain the calibration correlation corresponding to the vehicle model and between the location data measured by the ultrasonic sensor and the location data of actual obstacles,
wherein the position on the tested vehicle where the laser sensor of the tested vehicle is mounted and the position on the tested vehicle where the ultrasonic sensor of the tested vehicle is mounted are within a same horizontal plane.

In an embodiment of the present invention, the acquisition of the calibration correlation may be performed by the first acquisition unit 405 and the mapping unit 406 of the detection device. In other embodiments, the acquisition of the calibration correlation may be performed by units of other apparatuses or devices, such as a calibration unit of a service apparatus of an ultrasonic calibration system, a calibration unit of a control of the ultrasonic calibration system, and the like, which is not limited herein.

The adjustment unit 404 comprises:
an acquisition subunit 4041, configured to acquire a vehicle model of the vehicle;
a searching subunit 4042, configured to search for calibration correlation corresponding to the vehicle model of the vehicle,
wherein the calibration correlation is correlation between location data measured by an ultrasonic sensor and location data of actual obstacles, wherein ultrasonic sensors are mounted at a same position on vehicles with a same vehicle model; and
an adjustment subunit 4043, configured to adjust the length of the jump edge based on the calibration correlation.

As an alternative embodiment, the calibration correlation can also be acquired in the following way. Correlation between large quantities of location data measured by ultrasonic sensors of tested vehicles of the same vehicle model as the vehicle in actual detection processes and location data of actual obstacles is acquired. With the correlation data as training samples, a model associated with this vehicle model is trained, which can represent a model of correlation between the location data measured by the ultrasonic sensors and the location data of actual obstacles. Further, by inputting the vehicle model into the trained model at a later time, the searching subunit 4042 can use the model to find the correlation corresponding to this vehicle model and between the location data measured by the ultrasonic sensors and the location data of actual obstacles. By applying the embodiment described above, the probability of successful parking can be improved.

As an alternative embodiment, prior to initiating the parking, that is, prior to the detection at a specified frequency by the detection unit 401 using the ultrasonic sensors of the vehicle, the detection unit 401 may access historical parking records for the vehicle. If there is an available parking space in the historical parking records that matches the area where the current vehicle is located, the detection unit 401 recommends location information of the available parking space to the user. By applying the embodiment described above, it is possible to recommend an available parking space according to the user's parking habits, which can improve the user's driving experience.

As an alternative embodiment, if the acquisition subunit 4041 has detected that a headphone socket of the detection device is plugged into by a headphone plug of a wired headphone, the acquisition subunit 4041 acquires the vehicle model input by the user through the wired headphone plugged into the headphone socket of the detection device. If the acquisition subunit 4041 has detected that a Bluetooth module built in the detection device is connected to a Bluetooth-capable wireless device, the acquisition subunit 4041 acquires the vehicle model input by the user through the wireless device connected to the Bluetooth module built in the detection device. If the acquisition subunit 4041 has neither detected that the headphone socket of the detection device is plugged into by a headphone plug of a wired headphone nor detected that the Bluetooth module built in the detection device is connected to a Bluetooth-capable wireless device, the acquisition subunit 4041 displays a vehicle model inputting box in which the user enters the vehicle model of the vehicle. The acquisition subunit 4041 acquires the vehicle model of the vehicle through the vehicle model inputting box. By applying the embodiment described above, the user's driving experience can be improved.

By applying the detection device for detecting an available parking space illustrated in FIG. 7, the detection device uses the ultrasonic sensor of the vehicle to perform detection at the specified frequency, and determines a jump edge of the obstacle. After that, the detection device corrects the jump edge of the boundary of the measured obstacle according to a certain rule. This can detect more accurately available parking spaces, reduce parking spaces missed by detections, and enhance the efficiency of automatic parking. In addition, by applying the detection device as illustrated in FIG. 7, calibration correlation between location data measured by ultrasonic sensors and location data of actual obstacles is acquired in advance. Subsequently, a corresponding calibration correlation can be found directly according to the vehicle model, so that the efficiency of parking space detection can be improved.

### Sixth Embodiment

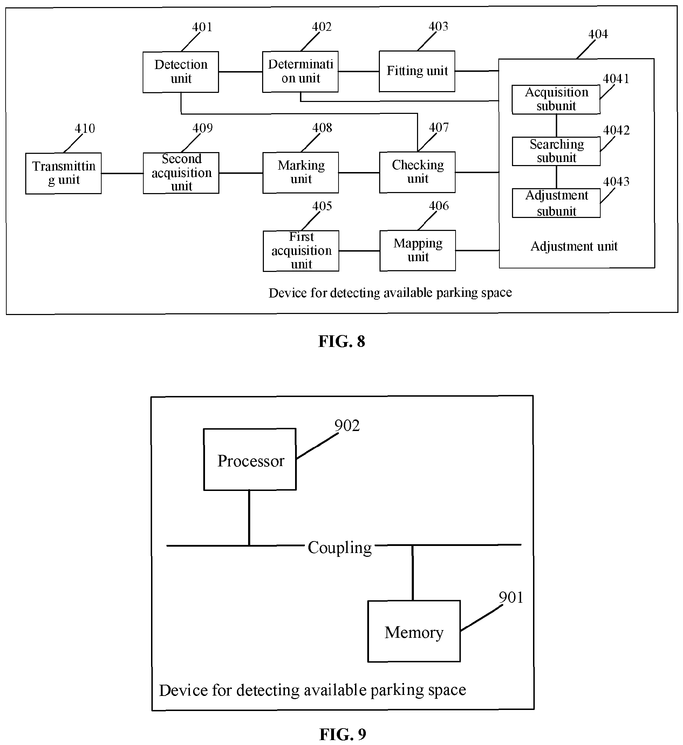

Referring to FIG. 8, FIG. 8 is a schematic structural view of yet another detection device for detecting an available parking space in accordance with an embodiment of the present invention. The detection device illustrated in FIG. 8 is further optimized from the detection device illustrated in FIG. 7. Compared with the detection device illustrated in FIG. 7, the detection device illustrated in FIG. 8 may further comprise:
a checking unit 407, configured to check whether a width of the available parking space is greater than a width of a body of the vehicle, after the determination unit 402 determines the location of the available parking space based on the length-adjusted jump edge; and
a marking unit 408, configured to mark the available parking space as a standard parking space such that the vehicle is parked in the standard parking space, after the checking unit 402 determines that the width of the available parking space is greater than the width of the body of the vehicle;
wherein the standard parking space is a parking space sufficient to accommodate the vehicle;
the detection unit 401 being further configured to proceed to perform detection using the ultrasonic sensor of the vehicle at the specified frequency, after the checking unit 407 determines that the width of the available parking space is smaller than or equal to the width of the body of the vehicle;
a second acquisition unit 409, configured to acquire location information of the standard parking space, after the marking unit 408 marks the available parking space as a standard parking space such that the vehicle is parked in the standard parking space; and
a transmitting unit 410, configured to transmit the location information of the standard parking space to a terminal device used by a user, such that the user finds the vehicle based on the location information of the standard parking space.

As an alternative embodiment, the second acquisition unit 409 may have a built-in positioning system through which the second acquisition unit 409 may acquire the location information of the standard parking space where the vehicle is parked.

In an embodiment of the present invention, the positioning system may include a Global Positioning System (GPS), a BeiDou Navigation Satellite System, or the like, which is not limited herein.

As an alternative embodiment, when the second acquisition unit 409 detects the end of the parking, the second acquisition unit 409 may reminds the user to pull out the vehicle key and close the vehicle door. By applying the above embodiment, it can prevent the user from forgetting to pull out the vehicle key or close the vehicle door after the parking.

By applying the detection device for detecting an available parking space illustrated in FIG. 8, the detection device uses the ultrasonic sensor of the vehicle to perform detection at the specified frequency, and determines a jump edge of the obstacle. After that, the detection device corrects the jump edge of the boundary of the measured obstacle according to a certain rule. This can detect more accurately available parking spaces, reduce parking spaces missed by detections, and enhance the efficiency of automatic parking. By applying the detection device as illustrated in FIG. 8, the calibration correlation between location data measured by an ultrasonic sensor and location data of actual obstacles is acquired in advance. Subsequently, a corresponding calibration correlation can be found directly according to the vehicle model, so that the efficiency of parking space detection can be improved. In addition, the detection device for detecting an available parking space, as illustrated in FIG. 8, further determines whether a parking space is sufficient to accommodate the vehicle to be parked therein after the available parking space is determined, which can improve parking safety. In addition, the detection device for detecting an available parking space, as illustrated in FIG. 8, transmits the location information of the standard parking space to the user, such that the user can find the vehicle according to the location information of the standard parking space and is reminded when the user forgets the location where the vehicle is parked.

### Seventh Embodiment

Referring to FIG. 9, FIG. 9 is a schematic structural view of still another detection device for detecting an available parking space in accordance with an embodiment of the present invention. As shown in FIG. 9, the detection device may comprise:
a memory device 901 having stored thereon executable program codes; and
a processor 902 coupled with the memory device 901,

wherein the processor 902 is configured to execute the executable program codes stored on the memory device 901 to carry out any of the methods for detecting an available parking space of FIG. 2, FIG. 3, and FIG. 5.

An embodiment of the present invention discloses a computer-readable storage medium having stored thereon a computer program, which causes a computer to carry out any of the methods for detecting an available parking space of FIG. 2, FIG. 3, and FIG. 5.

An embodiment of the present invention further discloses an application distributing platform for distributing a computer program product, wherein the computer program product, when executed on a computer, causes the computer to carry out some or all of the steps of any of the methods above.

It is to be understood that reference to "one embodiment" or" an embodiment" throughout this specification means that specific features, structures or characteristics described in connection with the embodiment is included in at least one embodiment of the present invention. Thus, the phrases "in one embodiment" or "in an embodiment" used throughout this specification are not necessarily referring to the same embodiment. In addition, the specific features, structures or characteristics may be combined in any suitable manner in one or more embodiments. Those skilled in the art will also appreciate that the embodiments described herein are alternative embodiments, not all illustrated acts or modules are required to implement the present invention.

In the various embodiments of the present invention, it should be understood that the order of execution of processes described above is not necessarily intended to indicate that the processes must be executed in this order. The processes should be executed in an order determined in terms of their functions and inherent logic. The order of execution of the processes described herein should not construed as any limitations upon the implementation of the embodiments of the present invention.

The units described above as separate components may or may not be physically separate, the components shown as units may or may not be physical units. That is, they may be located in one place, or may be distributed across multiple network units. Some or all of the units may be selected as desired to achieve the objectives of the present embodiments.

In addition, functional units in the embodiments of the present invention may be integrated in a single processing unit or may be physically exist separately, or two or more units may be integrated in a single unit. The integrated units described above may be embodied as either hardware or software functional units.

These integrated units, if embodied as software functional units and sold or used as a stand-alone product, may be stored in a computer accessible storage. Based on such understanding, the technical aspects of the present invention in essence, i.e., the part of the present invention that contributes to the prior art, or all or part of the technical aspects may be embodied as a software product stored in a storage comprising a plurality of requests to cause a computer device (which may be a personal computer, a server or a network device or the like, and in particular a processor in the computer device) to perform some or all of the steps of the embodiments of the present invention.

In the embodiments provided by the present invention, it should be understood that "B corresponding to A" means that B is associated with A and B can be determined based on A. It should also be understood, however, that determining B based on A does not mean determining B based on only A, but B may also be determined based on A and/or other information.

Those skilled in the art will appreciate that all or a portion of the methods of the embodiments described above may be performed by associated hardware instructed by a program that may be stored in a computer-readable storage medium. The storage medium includes read-only memory (ROM), random access memory (RAM), programmable read-only memory (PROM), erasable programmable read-only memory (EPROM), one-time programmable read-only memory (OTPROM), electrically erasable programmable read-only memory (EEPROM), compact disc read-only memory (CD-ROM) or other optical disk storage, magnetic disk storage, magnetic tape storage, or any other computer-readable medium for carrying or storing data.

The methods and devices for detecting an available parking space are provided by the embodiments of the present invention have been described in detail, where specific examples are used to describe the principles and embodiments of the present invention. The above description of the embodiments is only for the purpose of aiding in the understanding of methodologies and the core ideas of the present invention. Moreover, for those skilled in the art, variations in the scope of the embodiments and applications are possible in light of the concepts of the present invention. In summary, this specification should not be construed as a limitation to the present invention.

## Claims

1. A method for detecting an available parking space, comprising:
performing detection using an ultrasonic sensor of a vehicle at a specified frequency to obtain distances from the vehicle to an obstacle;
determining a plurality of location coordinates of the obstacle based on location coordinates of the ultrasonic sensor of the vehicle and the distances measured through multiple rounds of detection;
fitting the plurality of location coordinates to obtain a boundary of the obstacle, and detecting a jump edge of the boundary of the obstacle;
adjusting a length of the jump edge based on pre-constructed calibration correlation between location data measured by ultrasonic sensors and location data of actual obstacles; and
determining a location of an available parking space based on the length-adjusted jump edge.

2. The method of claim 1, wherein said adjusting a length of the jump edge based on the pre-constructed calibration correlation between location data measured by ultrasonic sensors and location data of actual obstacles comprises:
acquiring a vehicle model of the vehicle;
searching for calibration correlation corresponding to the vehicle model of the vehicle, wherein the calibration correlation is correlation between location data measured by an ultrasonic sensor and location data of actual obstacles, wherein ultrasonic sensors are mounted at a same position on vehicles of a same vehicle model; and
adjusting the length of the jump edge based on the calibration correlation.

3. The method of claim 2, further comprising:
acquiring a grid map constructed by a laser sensor and odometer of a tested vehicle of the same vehicle model to the vehicle, as the location data of actual obstacles; and
mapping location data measured by an ultrasonic sensor of the tested vehicle of the same vehicle model to the vehicle into the grid map, to obtain the calibration correlation corresponding to the vehicle model and between the location data measured by the ultrasonic sensor and the location data of actual obstacles,
wherein the mounting positions of the laser sensor and the ultrasonic sensor on the tested vehicle are within the same horizontal plane.

4. The method of claim 1, 2 or 3, the method further comprising, after determining the location of the available parking space based on the length-adjusted jump edge:
checking whether a width of the available parking space is greater than a width of a body of the vehicle;
if so, marking the available parking space as a standard parking space to cause the vehicle to park into the standard parking space, wherein the standard parking space is a parking space sufficient to accommodate the vehicle; and
if not, proceeding to perform the step of performing detection using the ultrasonic sensor of the vehicle at the specified frequency.

5. The method of claim 4, the method further comprising, after marking the available parking space as a standard parking space to cause the vehicle to park into the standard parking space:
acquiring location information of the standard parking space; and
transmitting the location information of the standard parking space to a terminal device of a user to allow the user to find the vehicle based on the location information of the standard parking space.

6. A detection device for detecting an available parking space, comprising:
detection unit, configured to perform detection using an ultrasonic sensor of a vehicle at a specified frequency to obtain distances from the vehicle to an obstacle;
a determination unit, configured to determine a plurality of location coordinates of the obstacle based on location coordinates of the ultrasonic sensor of the vehicle and the distances measured through multiple rounds of detection;
a fitting unit, configured to fit the plurality of location coordinates to obtain a boundary of the obstacle, and to detect a jump edge of the boundary of the obstacle; and
an adjustment unit, configured to adjust a length of the jump edge based on a pre-constructed calibration correlation between location data measured by ultrasonic sensors and location data of actual obstacles,
wherein the determination unit is further configured to determine a location of an available parking space based on the length-adjusted jump edge.

7. The detection device of claim 6, wherein the adjustment unit comprises:
an acquisition subunit, configured to acquire a vehicle model of the vehicle;
a searching subunit, configured to search for calibration correlation corresponding to the vehicle model of the vehicle, wherein the calibration correlation is correlation between location data measured by an ultrasonic sensor and location data of actual obstacles, wherein ultrasonic sensors are mounted at a same position on vehicles with a same vehicle model; and
an adjustment subunit, configured to adjust the length of the jump edge based on the calibration correlation.

8. The detection device of claim 7, further comprising:
a first acquisition unit, configured to acquire a grid map constructed by a laser sensor and odometer of a tested vehicle with the same vehicle model of the vehicle, as the location data of actual obstacles; and
a mapping unit, configured to map location data measured by an ultrasonic sensor of the tested vehicle with the same vehicle model of the vehicle into the grid map, to obtain the calibration correlation corresponding to the vehicle model and between the location data measured by the ultrasonic sensor and the location data of actual obstacles,
wherein the mounting positions of the laser sensor and the ultrasonic sensor on the tested vehicle are within the same horizontal plane.

9. The detection device of claim 6, 7 or 8, further comprising:
a checking unit, configured to check whether a width of the available parking space is greater than a width of a body of the vehicle, after the determination unit determines the location of the available parking space based on the length-adjusted jump edge; and
a marking unit, configured to mark the available parking space as a standard parking space to cause the vehicle to park into the standard parking space, after the checking unit determines that the width of the available parking space is greater than the width of the body of the vehicle, wherein the standard parking space is a parking space sufficient to accommodate the vehicle,
wherein the detection unit is further configured to proceed to perform detection using the ultrasonic sensor of the vehicle at the specified frequency, after the checking unit determines that the width of the available parking space is smaller than or equal to the width of the body of the vehicle.

10. The detection device of claim 9, further comprising:
a second acquisition unit, configured to acquire location information of the standard parking space, after the marking unit marks the available parking space as a standard parking space to cause the vehicle to park into the standard parking space; and
a transmitting unit, configured to transmit the location information of the standard parking space to a terminal device of a user to allow the user to find the vehicle based on the location information of the standard parking space.
